# EUROPEAN PATENT SPECIFICATION

(11) **EP 0 858 730 B1**
(45) Date of publication and mention of the grant of the patent: **02.05.2001**
(21) Application number: 98200103.4
(22) Date of filing: 15.01.1998
(51) Int. Cl.: A01C 15/00, B65D 88/60, E01H 10/00

(54) **A machine or an implement comprising a hopper**
Maschine oder Vorrichtung mit einem Behälter
Machine ou appareil comprenant un réservoir

(30) Priority: 22.01.1997 NL 1005056
(43) Date of publication of application: 19.08.1998
(73) Proprietor: MAASLAND N.V., 3155 PD Maasland (NL)
(72) Inventor: Bom, Cornelis Johannes Gerardus, 3181 VC Rozenburg (NL)
(74) Representative: Corten, Maurice Jean F.M.

(56) References cited:
- EP-A- 0 579 311
- WO-A-82/03839
- DE-B- 1 053 408
- GB-A- 687 890
- GB-A- 2 189 286

## Description

The present invention relates to a machine or an implement, in particular for distributing granular material, such as fertilizer, seed, or salt for example for icy roads, comprising a hopper including a discharge means, such as an outlet, said hopper being provided with volume-varying means for varying the volume available for the material to be kept in the hopper.

Such a machine or implement is known from GB-A-2,189,286. This known machine or implement comprises a bunker having two walls symmetrically disposed about a central longitudinal discharge outlet. The walls themselves are pivoted along their edges adjacent an outlet for varying the volume available for the material to be kept in the bunker.

The present invention has for its goal to provide an alternative machine or implement for distributing granular material.

According to the invention this is achieved when said volume-varying means are additional means provided inside the hopper.

For a better understanding the invention will further be described with reference to the accompanying drawings, in which:
Figure 1 is a side view of an agricultural machine according to the invention;
Figure 2 shows schematically a first embodiment of the construction in a view taken on the line II - II in Figure 1;
- Figure 3 shows schematically, in accordance with Figure 1, an alternative application of the invention;
Figure 4 shows schematically, in a partial view according to Figure 2, a second embodiment;
Figure 5 shows a third embodiment in accordance with Figure 4, and
Figure 6 shows a fourth embodiment of the invention according to Figure 4.

The invention is by no means restricted to the embodiments represented and described in the present figures; these only serve to illustrate the inventive idea.

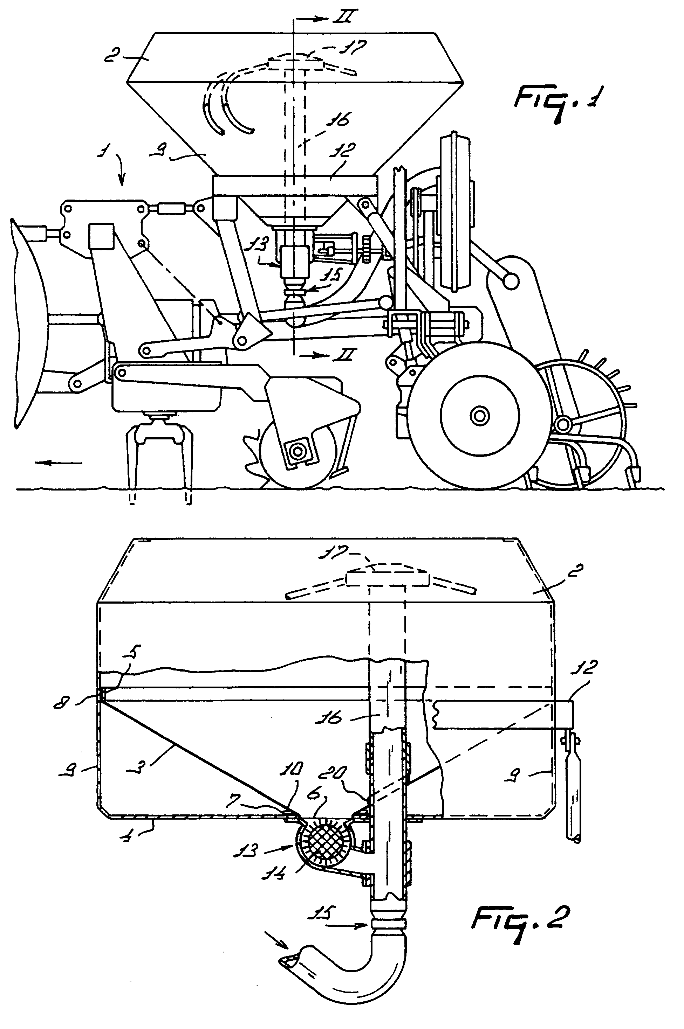

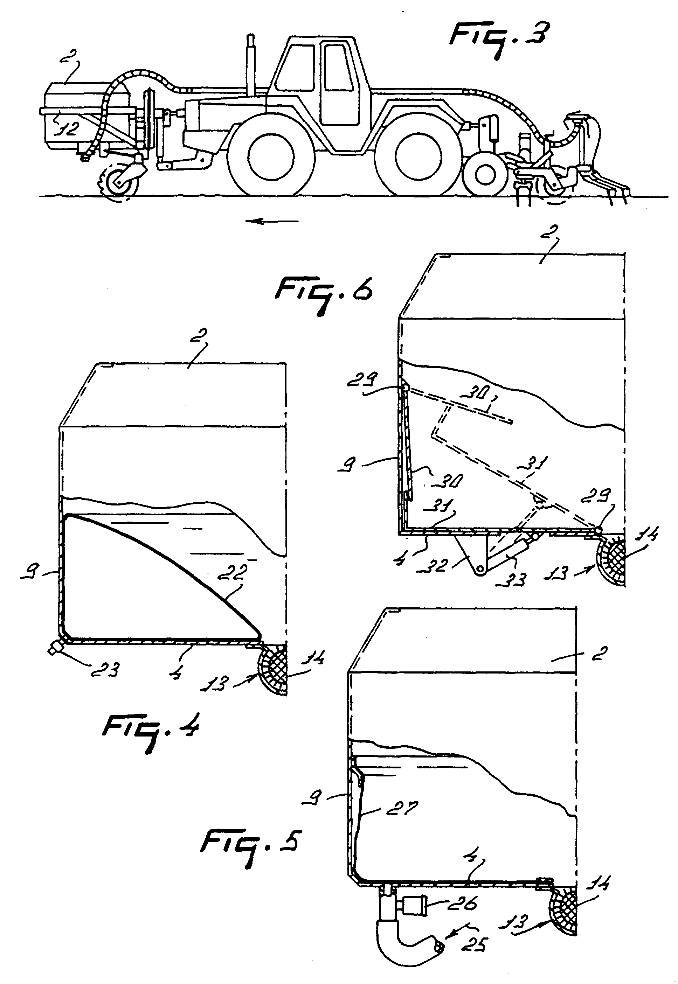

Figure 1 shows, in side view, a machine combination coupled with a tractor, which machine combination includes a seed drill with the usual components pertaining thereto, in particular as represented and described in Dutch patent application 1000920. In the present embodiment thereof, the hopper is substantially V-shaped in side view, while, in plan view, it is substantially rectangular and, in a cross-sectional view through the centre as represented in Figure 2, it has a substantially horizontally extending bottom portion 4. In the hopper 2 there is provided a flexible fleece 3. In the present embodiment, approximately halfway the height of the hopper 2, the fleece 3 including a fastening edge 8 is fitted to the walls 9 of the hopper 2, e.g. by gluing and/or by means of a clamp strip 5, so as to be closed on all sides. Centrally, the fleece 3 is provided with an aperture attuned to the outlet of the hopper 2, said outlet being circular in the present embodiment, while the fleece 3 is fixed to the bottom of the hopper with the aid of a fastening edge 7, e.g. by gluing or by means of a rigid clamping element 10, such as a clamping ring made of plate material, which is screwed to the bottom 4. The hopper 2 is supported on all sides by means of a frame 12. In the present embodiment, the outlet 6 of the hopper 2 debouches into a metering device 13 including a metering wheel 14, via which the metered seed is supplied to the opening in a Venturi-device 15 in a transport tube 16 of a pneumatic transport system. In the embodiment shown, the transport tube 16 extends vertically through the bottom 4 of the hopper 2 and through the fleece 3. In the tube 16 air and metered material are mixed optimally. To the top end near the upper side of the hopper 2 there is provided a distribution cap 17 from which the seed and air mixture is passed via a plurality of flexible lines having a smaller diameter to separate seed coulters of the seed drill. Via a bush 20 the fleece 3 is disposed in a clamping manner around the tube 16. The mixing tube 16 is designed so as to be detachable into parts just above the bush 20 for the purpose of facilitating the application of the fleece 3. In the embodiment of Figure 1, the volume of the hopper 2 has been increased by making the hopper bottom extend until the lateral sides of the machine. In side view, the V-shape in the lower part of the hopper 2 is maintained, so that the adjustments of the machine are minimized and the machine remains correctly attuned to form a combination with a tractor or with a soil cultivating machine to be coupled at its front side.

The fleece 3 is preferably designed so as to consist of at least two equal parts. The invention further enables an embodiment of the hopper 2 in which the latter, as shown in Figure 3, also has a bottom extending evenly across a considerable part of the length of the hopper 2 in the direction of travel A. In such an embodiment, the Venturi-device 15 and the transport tube 16 extend horizontally along the bottom of the hopper 2 towards a distribution cap 17 included in the machine 1 outside the hopper 2, e.g. in a machine part that is coupled to the rear side or the front side of the tractor. Besides the opening 6 there may be provided a further opening to which a suction element can be connected for sucking the material out of the hopper.

Figure 3 shows the use of the hopper 2 according to the invention in a machine in which said hopper 2 is connected to the front lifting hitch of a tractor so as to be physically separated from the remaining machine parts. During operation the hopper is supported by a supporting roller. Further applications of the invented construction are fertilizer distributors, salt distributors for keeping the roads clear from ice and, though economically less interesting, all stationary applied containers, such as concentrate silos on farms, flour bins in bakeries and cement or gravel silos in road-building.

Figure 4 shows an inflatable body or cushion 22 accommodated in the hopper 2, having at its upper side at least for the greater part the shape described in the embodiment including the flexible fleece 3 and which, according to the invention, is preferably glued partially against the walls 9 and the bottom of the hopper 2. The inflatable cushion 22 is provided with an air valve 23 which is fittingly inserted through an opening provided for the purpose in the hopper 2 and to which a line for the supply of compressed air may permanently be connected. In a preferred embodiment, there are provided two equal inflatable cushions 22. In the embodiment of Figure 3 these inflatable cushions are accommodated in a front and a rear half, while during operation each time the front inflatable cushion 22 is inflated prior to the rear one. The most common application of the invention is an arrangement in which the inflatable cushions 22 are located right and left in the hopper 2 and are inflated simultaneously.

Figure 5 shows an embodiment in which an air-impermeable flexible canvas 27 assumes the shape described with reference to Figure 2, said canvas 27 being connected with the lower side of the hopper 2. In this situation the relevant lower part of the hopper 2 is provided with at least one inlet 25 for the supply of compressed air. The relevant part of the hopper 2 is additionally provided with an overpressure valve 26 for protecting the canvas 27 against being torn.

Figure 6 shows an embodiment in which the volume-changing means of the hopper 2 are designed substantially as rigid ones, i.e. in the form of additional, substantially plate-like wall and bottom portions which are pivotable about a hinge pin. The embodiment shown comprises a bottom portion 31 pivotable about a horizontal pivotal axis 29 orientated in the direction of travel and a wall portion 30 pivotable about a parallel axis 29 and orientated substantially upwardly. Near its outer end the bottom portion 31 is provided with a substantially upwardly orientated square edge which, in upward direction, hooks up the pivotable side wall portion 30 and, seen from the centre of the hopper 2, hooks behind the wall portion 30. Between the bottom portion 4 and a support 32 fitted to the hopper 2, an adjusting element 33, such as a hydraulic adjusting cylinder, is pivotably disposed about pivotal axes 29 parallel to the aforementioned pivotal axes 29. In a non-shown alternative, between the bottom portion 31 and the bottom or a support fitted therebelow, there is disposed a spring element, preferably constituted by a compression spring. The characteristics thereof are adapted to the weight and the required sliding angle of the material, such as seed, to be received in the hopper 2. When different material, such as salt for icy roads, is kept in the hopper 2, an other spring is applied. In accordance with the invention, in the other embodiments, such an automation is realized for example by means of a pressure sensor which is connected by means of a slide to the hydraulic or pneumatic operating system for the canvas 27, the inflatable cushion 22 or the wall portions 30 and 31.

In all the embodiments of the described volume-varying means, for the purpose of covering same there may be provided an additional fleece or canvas, whether or not of a flexible type, being capable of assuming substantially at least the shape of the fleece shown in Figure 2. When a non-flexible fleece is applied, folds are provided therein for a good adaptation to the shape of the hopper.

The invention is not restricted to the aforementioned description, but also relates to all the details in the drawings, in particular also to the components contributing to the invention. The invention further relates to all sorts of alternatives in the construction, of course, being within the terms of the following claims.

## Claims

1. A machine or an implement, in particular for distributing granular material, such as fertilizer, seed, or salt for example for icy roads, comprising a hopper (2) including a discharge means, such as an outlet (6), said hopper (2) being provided with volume-varying means (3, 22, 27, 30, 31) for varying the volume available for the material to be kept in the hopper (2), characterized in that, said volume-varying means (3, 22, 27, 30, 31) are additional means provided inside the hopper (2).

2. A machine as claimed in claim 1, characterized in that the volume-varying means (3, 22, 27, 30, 31) are active near a bottom portion (4) of the hopper (2).

3. A machine as claimed in claim 1 or 2, characterized in that the means (3, 22, 27, 30, 31) are disposed partially against an upright side wall (9) and partially against a bottom portion (4).

4. A machine as claimed in claim 1, 2 or 3, characterized in that, in a first utmost position defining the greatest volume of the hopper (2), the means are located in the immediate vicinity of the relevant bottom and/or wall portion (4; 9), and that, in a second position defining the smallest volume of the hopper (2), the means are located substantially at such a distance from a relevant bottom or wall portion (4; 9) that contact therewith is impossible.

5. A machine as claimed in any one of the preceding claims, characterized in that the volume-varying means (3, 22, 27, 30, 31) are disposed permanently.

6. A machine as claimed in any one of the preceding claims, characterized in that the machine is provided with adjusting means (23, 25, 33) for adjusting the position of the volume-varying means (3, 22, 27, 30, 31).

7. A machine as claimed in any one of the preceding claims, characterized in that the volume-varying means (3, 22, 27, 30, 31) are capable of assuming an obliquely downward position in the direction of the discharge means (6) of the hopper (2).

8. A machine as claimed in any one of the preceding claims, characterized in that the volume-varying means (3, 22, 27, 30, 31) are capable of assuming a substantially even position or an upwardly bulging position.

9. A machine as claimed in any one of the preceding claims, characterized in that the position of the volume-varying means (3, 22, 27, 30, 31) is capable of being changed at least partially against elastic action.

10. A machine as claimed in any one of the preceding claims, characterized in that the volume-varying means (3, 22, 27, 30, 31) are elastically transformable ones, such as an elastically transformable canvas or cloth (3).

11. A machine as claimed in any one of the preceding claims, characterized in that the lower side of the hopper (2) comprises a bottom portion (31) extending, in a direction facing away from the outlet (6), in a least oblique position at an angle of less than 45° relative to the horizontal.

12. A machine as claimed in any one of the preceding claims, characterized in that the means (3, 22, 27, 30, 31) comprise a space capable of being filled up with air.

13. A machine as claimed in claim 12, characterized in that the space is formed by means of space enclosing material (22).

14. A machine as claimed in any one of the preceding claims, characterized in that the upper sides of the volume-varying means are provided with and/or constituted by material-impermeable flexible covering means, such as canvas.

15. A machine as claimed in claim 14, characterized in that the covering means comprise a cloth or canvas and/or at least one plate (30, 31) which is hingeable along an edge.

## Patentansprüche

1. Maschine oder Vorrichtung, insbesondere zum Streuen von körnigem Gut, wie Kunstdünger, Saatgut oder z. B. Salz für vereiste Straßen, mit einem Vorratsbehälter (2), der eine Auslaßvorrichtung, wie z. B. einen Auslaß (6), enthält, wobei der Vorratsbehälter (2) mit volumenverändernden Vorrichtungen (3, 22, 27, 30, 31) versehen ist, um das Volumen zu verändern, das für das in dem Vorratsbehälter (2) aufzubewahrende Gut zur Verfügung steht,
dadurch gekennzeichnet, daß die volumenverändernden Vorrichtungen (3, 22, 27, 30, 31) zusätzliche, innerhalb des Vorratsbehälters (2) angeordnete Vorrichtungen sind.

2. Maschine nach Anspruch 1,
dadurch gekennzeichnet, daß die volumenverändernden Vorrichtungen (3, 22, 27, 30, 31) nahe einem Boden (4) des Vorratsbehälters (2) wirksam sind.

3. Maschine nach Anspruch 1 oder 2,
dadurch gekennzeichnet, daß die Vorrichtungen (3, 22, 27, 30, 31) teilweise an einer aufrechten Seitenwand (9) und teilweise an einem Boden (4) angeordnet sind.

4. Maschine nach Anspruch 1, 2 oder 3,
dadurch gekennzeichnet, daß die Vorrichtungen in einer ersten äußersten Position, die dem größten Volumen des Vorratsbehälters (2) entspricht, in unmittelbarer Nähe des jeweiligen Bodens und/oder der Wand (4; 9) angeordnet sind, und daß die Vorrichtungen in einer zweiten Position, die dem kleinsten Volumen des Vorratsbehälters (2) entspricht, im wesentlichen in einem solchen Abstand von einem jeweiligen Boden oder einer Wand (4; 9) angeordnet sind, daß ein Kontakt mit ihnen nicht möglich ist.

5. Maschine nach einem der vorhergehenden Ansprüche,
dadurch gekennzeichnet, daß die volumenverändernden Vorrichtungen (3, 22, 27, 30, 31) auf Dauer angebracht sind.

6. Maschine nach einem der vorhergehenden Ansprüche,
dadurch gekennzeichnet, daß die Maschine mit Stellvorrichtungen (23, 25, 33) zum Einstellen der Position der volumenverändernden Vorrichtungen (3, 22, 27, 30, 31) versehen ist.

7. Maschine nach einem der vorhergehenden Ansprüche,
dadurch gekennzeichnet, daß die volumenverändernden Vorrichtungen (3, 22, 27, 30, 31) in der Lage sind, eine schräg abwärts gerichtete Position in Richtung auf die Auslaßvorrichtung (6) des Vorratsbehälters (2) einzunehmen.

8. Maschine nach einem der vorhergehenden Ansprüche,
dadurch gekennzeichnet, daß die volumenverändernden Vorrichtungen (3, 22, 27, 30, 31) in der Lage sind, eine im wesentlichen ebene Position oder eine nach oben gewölbte Position einzunehmen.

9. Maschine nach einem der vorhergehenden Ansprüche,
dadurch gekennzeichnet, daß die Position der volumenverändernden Vorrichtungen (3, 22, 27, 30, 31) zumindest teilweise gegen elastische Kraft veränderbar ist.

10. Maschine nach einem der vorhergehenden Ansprüche,
dadurch gekennzeichnet, daß die volumenverändernden Vorrichtungen (3, 22, 27, 30, 31) durch elastisch verformbare Vorrichtungen, wie z. B. elastisch verformbares Segeltuch oder Stoff (3), gebildet sind.

11. Maschine nach einem der vorhergehenden Ansprüche,
dadurch gekennzeichnet, daß die Unterseite des Vorratsbehälters (2) einen Boden (31) aufweist, der sich in vom Auslaß (6) abgewandter Richtung in zumindest schräger Lage in einem Winkel von weniger als 45° zur Horizontalen erstreckt.

12. Maschine nach einem der vorhergehenden Ansprüche,
dadurch gekennzeichnet, daß die Vorrichtungen (3, 22, 27, 30, 31) einen Raum umschließen, der mit Luft befüllbar ist.

13. Maschine nach Anspruch 12,
dadurch gekennzeichnet, daß der Raum mit Hilfe von raumumschließendem Material (22) gebildet wird.

14. Maschine nach einem der vorhergehenden Ansprüche,
dadurch gekennzeichnet, daß die Oberseiten der volumenverändernden Vorrichtungen mit gutundurchlässigen elastischen Abdeckmitteln, wie z. B. Segeltuch, versehen und/oder durch sie gebildet sind.

15. Maschine nach Anspruch 14,
dadurch gekennzeichnet, daß die Abdeckmittel Stoff oder Segeltuch und/oder mindestens eine Platte (30, 31) umfassen, die um eine Kante schwenkbar ist.

## Revendications

1. Machine ou installation, destinée en particulier à distribuer un matériau granulaire, tel que de l'engrais, des semences, ou du sel destiné par exemple aux routes recouvertes de glaces, qui comporte une trémie (2) comportant des moyens d'évacuation, tels qu'une sortie (6), ladite trémie (2) étant munie de moyens de variation de volume (3, 22, 27, 30, 31) pour faire varier le volume de matériau disponible devant être maintenu dans la trémie (2), caractérisée en ce que lesdits moyens de variation de volume (3, 22, 27, 30, 31) sont des moyens supplémentaires fournis à l'intérieur de la trémie (2).

2. Machine selon la revendication 1, caractérisée en ce que les moyens de variation de volume (3, 22, 27, 30, 31) sont actifs à proximité d'une partie de fond (4) de la trémie (2).

3. Machine selon la revendication 1 ou 2, caractérisée en ce que les moyens (3, 22, 27, 30, 31) sont disposés partiellement contre une paroi latérale verticale (9), et partiellement contre une partie de fond (4).

4. Machine selon l'une quelconque des revendications précédentes, caractérisée en ce que, dans une première position maximum définissant le volume le plus grand de la trémie (2), les moyens sont positionnés à proximité immédiate de la partie de fond concernée et/ou de la partie de paroi concernée (4 ; 9), et en ce que, dans une seconde position définissant le volume le plus petit de la trémie (2), les moyens sont positionnés sensiblement à une distance telle à partir de la partie de fond concernée ou de la partie de paroi (4 ; 9) qu'ils ne peuvent pas venir en contact avec celle-ci.

5. Machine selon l'une quelconque des revendications précédentes, caractérisée en ce que les moyens de variation de volume (3, 22, 27, 30, 31) sont disposés de manière permanente.

6. Machine selon l'une quelconque des revendications précédentes, caractérisée en ce que la machine est munie de moyens d'ajustement (23, 25, 33) pour ajuster la position des moyens de variation de volume (3, 22, 27, 30, 31).

7. Machine selon l'une quelconque des revendications précédentes, caractérisée en ce que les moyens de variation de volume (3, 22, 27, 30, 31) peuvent prendre une position en oblique vers le bas dans la direction des moyens d'évacuation (6) de la trémie (2).

8. Machine selon l'une quelconque des revendications précédentes, caractérisée en ce que les moyens de variation de volume (3, 22, 27, 30, 31) peuvent prendre une position sensiblement régulière ou une position bombée vers le haut.

9. Machine selon l'une quelconque des revendications précédentes, caractérisée en ce que la position des moyens de variation de volume (3, 22, 27, 30, 31) peut être changée au moins partiellement à l'encontre d'une action élastique.

10. Machine selon l'une quelconque des revendications précédentes, caractérisée en ce que les moyens de variation de volume (3, 22, 27, 30, 31) sont des moyens pouvant être transformés élastiquement, tels qu'une toile ou un tissu pouvant être déformé élastiquement (3).

11. Machine selon l'une quelconque des revendications précédentes, caractérisée en ce que le côté inférieur de la trémie (2) comporte une partie formant fond (31) s'étendant, dans une direction dirigée loin de la sortie (6), dans une position au moins en oblique selon un angle inférieur à 45° par rapport à l'horizontale.

12. Machine selon l'une quelconque des revendications précédentes, caractérisée en ce que les moyens (3, 22, 27, 30, 31) comportent un espace pouvant être rempli d'air.

13. Machine selon la revendication 12, caractérisée en ce que l'espace est formé par l'intermédiaire d'un matériau enfermant un espace (22).

14. Machine selon l'une quelconque des revendications précédentes, caractérisée en ce que les côtés supérieurs des moyens de variation de volume sont munis et/ou constitués de moyens de recouvrement souples imperméables au matériau, tels qu'une toile.

15. Machine selon la revendication 14, caractérisée en ce que les moyens de recouvrement comportent un tissu ou une toile et/ou au moins une plaque (30, 31) qui est articulée le long d'un bord.
